# EUROPÄISCHE PATENTSCHRIFT

(11) **EP 2 662 594 B1**
(45) Veröffentlichungstag und Bekanntmachung des Hinweises auf die Patenterteilung: **15.07.2015**
(21) Anmeldenummer: 13165687.8
(22) Anmeldetag: 29.04.2013
(51) Int. Cl.: F16H 3/00, B60K 6/485, B60K 6/547, F16H 3/08, F16H 3/093, B60K 6/48, B60K 6/26

(54) **Doppelkupplungsgetriebe**
Double clutch transmission
Engrenage à couplage double

(30) Priorität: 09.05.2012 DE 102012009484
(43) Veröffentlichungstag der Anmeldung: 13.11.2013
(73) Patentinhaber: GETRAG Getriebe- und Zahnradfabrik Hermann Hagenmeyer GmbH & Cie KG, 74199 Untergruppenbach (DE)
(72) Erfinder: Weller, Jens, 74199 Untergruppenbach (DE); Kranich, Klaus, 71691 Freiberg (DE)
(74) Vertreter: Witte, Weller & Partner Patentanwälte mbB

(56) Entgegenhaltungen:
- EP-A1- 2 385 270
- EP-A1- 2 390 127
- EP-A2- 2 336 599
- DE-A1- 10 133 695
- DE-A1-102010 020 856

## Beschreibung

Die vorliegende Erfindung betrifft ein Doppelkupplungsgetriebe für ein Kraftfahrzeug, gemäß dem Oberbegriff von Anspruch 1.

Doppelkupplungsgetriebe sind im Stand der Technik allgemein bekannt. Diese weisen zwei Teilgetriebe auf, bei denen eines den geraden Gangstufen und das andere den ungeraden Gangstufen zugeordnet ist. Hierzu weisen Doppelkupplungsgetriebe zwei Eingangswellen auf, die mit einer Doppelkupplungsanordnung verbunden sind, die zwei unabhängig voneinander ansteuerbare Reibkupplungen (beispielsweise nasslaufende Lamellenkupplungen oder trockene Reibkupplungen) aufweist. Ein Eingang der Doppelkupplungsanordnung ist dabei in der Regel mit einem Antriebsmotor wie einem Verbrennungsmotor verbunden. Durch überschneidende Betätigung der zwei Reibkupplungen können Gangwechsel zugunterbrechungsfrei durchgeführt werden.

Solche Doppelkupplungsgetriebe können in einem Kraftfahrzeug sowohl in Längsrichtung als auch quer zur Längsrichtung eingebaut werden. Insbesondere in letzterem Fall besteht ein hoher Bedarf an einer axial kurzen Baulänge. Zu diesem Zweck ist es bekannt, parallel zu einer Eingangswellenanordnung zwei Vorgelegewellen anzuordnen, auf die Losräder zum Ein- und Auslegen von Gangstufen verteilt werden können. In diesem Fall stehen Abtriebsräder der Vorgelegewelle mit einem Eingangsglied eines Differenzials in Eingriff, das Antriebsleistung auf zwei angetriebene Räder des Kraftfahrzeuges verteilt.

Ferner ist ein wichtiger Parameter bei der Auslegung von Doppelkupplungsgetrieben die Spreizung, die in der Regel mit der Anzahl der Gangstufen korreliert, da die Gangstufen beispielsweise an die Charakteristik eines Verbrennungsmotors angepasst sein müssen, weil eine geeignete Abstufung zwischen den Gangstufen vorhanden sein muss. Auch besteht auf dem Gebiet der Kraftfahrzeugantriebsstränge generell ein Bedarf, diese zu hybridisieren. Hierunter ist generell zu verstehen, dass zusätzlich zu einem Antriebsmotor in Form eines Verbrennungsmotors eine elektrische Maschine in den Antriebsstrang integriert wird, die zum Bereitstellen von alternativer oder zusätzlicher Antriebsleistung als Motor betrieben werden kann und/oder rekuperierend als Generator betrieben werden kann.

Schließlich ist bei derartigen Doppelkupplungsgetrieben in der Regel eine Parksperrenanordnung vorzusehen, die in einer P-Stellung eines Wahlschalters im Fahrgastraum den Abtrieb des Antriebsstranges blockiert, also ein Rollen des Fahrzeuges verhindert. Derartige Parksperren können vorzugsweise durch Parksperrenräder realisiert werden, die mit einer Welle fest verbunden sind, die direkt auf die angetriebenen Räder wirkt. Das Sperren bzw. das Entriegeln der Parksperrenanordnung kann beispielsweise mittels einer Parksperrenklinke erfolgen.

Zur Erzielung einer axial kurzen Bauweise ist es bei den oben genannten Drei-Wellengetrieben, die zwei Vorgelegewellen aufweisen, auch bekannt, eine sogenannte "Doppelnutzung" zu realisieren. Bei einer solchen Doppelnutzung steht ein Festrad der Eingangswellenanordnung sowohl mit einem Losrad der einen Vorgelegewelle als auch mit einem Losrad der anderen Vorgelegewelle in Eingriff, um auf diese Weise alternativ über das eine Festrad zwei Gangstufen schalten zu können.

Ein Doppelkupplungsgetriebe der eingangs genannten Art ist aus dem Dokument US 2010/0251840 A1 bekannt, bei dem eine Parksperrenanordnung an einer separaten Nebenwelle angeordnet ist. Ferner offenbart das Dokument DE 10 2004 056 936 A1 ein ähnliches Getriebe, das sechs Vorwärtsgangstufen aufweist. Beide Getriebe sind jedoch nicht für eine Hybridisierung ausgelegt. Gleiches gilt für ein Sieben-Ganggetriebe, das aus dem Dokument DE 103 05 241 A1 bekannt ist.

Aus dem Dokument WO 2006/040150 ist ein weiteres Doppelkupplungsgetriebe bekannt, das sechs Vorwärtsgangstufen und eine geringe Spreizung aufweist. Bei diesem Getriebe ist eine elektrische Innenläufermaschine parallel zu den Eingangswellen angeordnet und über eine oder zwei Kupplungen an einen bzw. zwei Radsätze des Getriebes anbindbar. Hierdurch kann einem oder beiden Teilgetrieben elektrische Antriebsleistung zugeführt werden.

Ferner offenbart das Dokument DE 10 2011 033 074 A1 ein Getriebe mit einer einzelnen Anfahrkupplung, das zwei Antriebseinheiten aufweist und so aufgebaut ist, dass eine elektrische Maschine zur Zugkraftunterstützung verwendbar ist. Die elektrische Maschine ist mit einer Eingangswelle verbunden und konzentrisch hierzu angeordnet, so dass sich starke Einschränkungen hinsichtlich der Einbaulage der elektrischen Maschine ergeben. Dokument DE 101 33 695 A1 offenbart ein Doppelkupplungsgetriebe, das sechs Vorwärtsgangstufen aufweist.

Das Dokument DE 10 2007 050 656 A1 offenbart ein Doppelkupplungsgetriebe, bei dem eine elektrische Maschine an eine Eingangswelle von einem der Teilgetriebe angekoppelt ist. Ein ähnliches Konzept ist aus dem Dokument DE 10 2006 036 758 A1 bekannt, bei dem an die Eingangswellen des Doppelkupplungsgetriebes jeweils eine elektrische Maschine fest angebunden ist.

Ein Doppelkupplungsgetriebe, das die Merkmale des Oberbegriffs von Anspruch 1 aufweist, mit sieben Vorwärtsgangstufen ist zudem aus dem Dokument DE 10 2010 020 856 A1 bekannt, wobei hier eine Parksperrenanordnung an einer Vorgelegewelle oder an einer separaten Nebenwelle angeordnet ist. Im ersten Fall ist ein Parksperrenrad axial zu einem Losrad der ersten Vorwärtsgangstufe ausgerichtet. Eine Hybridisierung wird in diesem Dokument nicht erwähnt.

Schließlich ist aus dem Dokument DE 10 2004 049 832 A1 ein Doppelkupplungsgetriebe mit sieben Vorwärtsgangstufen für den Front-Quereinbau bekannt, bei dem mehrere Zahnräder von Vorwärtsgangstufen zur Einrichtung einer Rückwärtsgangstufe genutzt werden, so dass ein separates Drehrichtungsumkehrrad nicht notwendig ist. Allerdings ist hierbei eine komplexe Schaltkupplung notwendig, die zwei Losräder miteinander verbinden kann.

Vor dem obigen Hintergrund ist es eine Aufgabe der Erfindung, ein verbessertes Doppelkupplungsgetriebe anzugeben, das hinsichtlich der baulichen Abmessungen, insbesondere in axialer Richtung, hinsichtlich der Spreizung, hinsichtlich der Abstufung, hinsichtlich der Hybridisierung und/oder hinsichtlich der Parksperrenrealisierung optimiert ist.

Diese Aufgabe wird bei dem eingangs genannten Doppelkupplungsgetriebe durch die Merkmale des kennzeichnenden Teils von Anspruch 1 gelöst.

Auf diese Weise kann eine Hybridisierung des Doppelkupplungsgetriebes, das wenigstens sieben Vorwärtsgangstufen aufweist, und das mit zwei Vorgelegewellen ausgestattet ist, konstruktiv günstig realisiert werden. Durch die Anbindung an ein Losrad ist dabei eine Mehrzahl von Betriebsmodi möglich, einschließlich einem rein elektrischen Fahrbetrieb (bei diesem sind beispielsweise beide Reibkupplungen der Doppelkupplungsanordnung geöffnet und eine dem Losrad zugeordnete Schaltkupplung geschlossen), einem Anlassen des Verbrennungsmotors (sofern jene Reibkupplung geschlossen wird, die der Eingangswelle zugeordnet ist, an der ein Festrad festgelegt ist, das mit dem Losrad in Eingriff steht, an dem die elektrische Maschine angebunden ist). Ferner ist auch eine Rekuperation möglich, insbesondere auch wenn ein Teilgetriebe aktiv ist, dem das Losrad nicht zugeordnet ist.

Durch die wenigstens sieben Gangstufen kann eine hohe Spreizung realisiert werden. Das erfindungsgemäße Doppelkupplungsgetriebe eignet sich insbesondere für den Front/Quereinbau in einem Kraftfahrzeug. Ferner lässt sich bei einem Doppelkupplungsgetriebe dieser Art eine Parksperrenanordnung gut realisieren.

Die Aufgabe wird somit vollkommen gelöst.

Gemäß einer besonders bevorzugten Ausführungsform ist das Losrad, an das die elektrische Maschine angebunden oder anbindbar ist, der dritten oder der vierten Gangstufe zugeordnet, insbesondere einer viert- oder fünfthöchsten Gangstufe des Doppelkupplungsgetriebes.

Mit dieser Ausführungsform kann dann, wenn jene Gangstufe aktiv ist, über die elektrische Maschine ein Boost-Betrieb stattfinden, oder auch - im Schubbetrieb - eine Rekuperation. Sofern das dieser Gangstufe zugeordnete Teilgetriebe inaktiv ist, kann das Losrad ebenfalls mit der zugehörigen Vorgelegewelle verbunden werden, um auf diese Weise zumindest eine Rekuperation durchzuführen.

Die Anbindung an eine mittlere Gangstufe ermöglicht dabei einen Boost-Betrieb insbesondere bei mittleren Geschwindigkeiten, so dass das Durchzugsvermögen beispielsweise zum Überholen deutlich verbessert ist.

Gemäß einer Ausführungsform ist die elektrische Maschine dabei über ein Zahnrad an das Losrad angebunden, wobei das Zahnrad mit dem Losrad in direktem Eingriff steht.

Hierbei kann die elektrische Maschine beispielsweise eine Ausgangswelle aufweisen, die mit diesem Zahnrad direkt verbunden ist. Alternativ kann auch noch ein Zwischenzahnrad dazwischengeschaltet werden, um die Übersetzungen anzupassen.

In jedem Fall kann die Anbindung von außerhalb des Getriebes über eine Öffnung in dem Getriebegehäuse erfolgen, wobei das Zahnrad direkt mit dem betreffenden Losrad in Eingriff steht. Hierdurch kann auch die axiale Bauweise verkürzt werden.

Gemäß einer alternativen Ausführungsform ist die elektrische Maschine über ein Zahnrad an das Losrad angebunden, wobei das Zahnrad mit einem Nebenzahnrad in direktem Eingriff steht, das fest mit dem Losrad verbunden ist.

Hierbei kann ein ggf. vorhandener axialer Bauraum ausgenutzt werden, um das Losrad drehfest mit dem Nebenzahnrad zu verbinden, um auf diese Weise eine bessere Übersetzungsanpassung zu erzielen.

Insgesamt ist es ferner vorteilhaft, wenn die elektrische Maschine an ein Losrad, das einer Vorwärtsgangstufe zugeordnet ist, und/oder an ein Losrad anbindbar ist, das einer Rückwärtsgangstufe zugeordnet ist.

Bevorzugt ist eine Anbindung an eine Vorwärtsgangstufe, und zwar beispielsweise so, dass ein Rotor der elektrischen Maschine immer mit dem Losrad mitdreht. Alternativ hierzu ist es auch möglich, die elektrische Maschine über eine Kupplung mit dem Losrad zu verbinden.

Da die elektrische Maschine jeweils an ein Losrad angebunden wird, ist es auch möglich, eine Motorwelle vorzusehen, die zwei Zahnräder trägt, die mit dem Losrad der Vorwärtsgangstufe und mit dem Losrad der Rückwärtsgangstufe verbunden sind. Gemäß einer weiteren bevorzugten Ausführungsform ist die elektrische Maschine als Außenläufermaschine ausgebildet.

In diesem Fall ist es möglich, an dem Außenläufer ein oder mehrere Zahnräder festzulegen (Zahnkränze), die dann mit dem Losrad der Vorwärtsgangstufe und/oder mit dem Losrad der Rückwärtsgangstufe verbunden werden.

Insbesondere, wenn sowohl eine Anbindung an ein Losrad einer Vorwärtsgangstufe als auch eine Anbindung an ein Losrad einer Rückwärtsgangstufe gewünscht ist, können auf diese Weise zwei Zahnkränzen an dem Außenläufer angebracht werden, die mit den jeweiligen Losrädern in Eingriff stehen.

In einer weiteren bevorzugten Ausführungsform, die in Verbindung mit dem Oberbegriff des Anspruchs 1 eine eigene Erfindung darstellt, ist ein der siebten Vorwärtsgangstufe zugeordnetes Losrad an einem dem Getriebeeingang entgegengesetzten Ende von einer der Vorgelegewellen angeordnet.

Durch die Anordnung des Losrades für die höchste Gangstufe an dem axialen Ende der zugeordneten Vorgelegewelle ist es möglich, hierfür einen kleinen Lagerdurchmesser zu wählen, wodurch es wiederum ermöglicht wird, für das Losrad der siebten Gangstufe einen kleineren Fußkreisdurchmesser zu wählen. Hierdurch kann die Spreizung des Getriebes erhöht werden, beispielsweise auf Werte größer 8, insbesondere im Bereich von 8 bis 9 und bis zu 10.

Dabei ist es bevorzugt, wenn das der siebten Vorwärtsgangstufe zugeordnete Losrad mit einem Festrad in Eingriff steht, das ferner mit einem einer weiteren, vorzugsweise der fünften, Vorwärtsgangstufe zugeordneten Losrad in Eingriff steht.

Hierdurch wird eine Doppelverwendung realisiert und folglich eine axial kurze Bauweise.

Gemäß einer weiteren bevorzugten Ausführungsform ist in axialer Richtung zwischen einem der ersten Vorwärtsgangstufe zugeordneten Radsatz und einer diesem Radsatz schaltenden Schaltkupplung ein Radsatz angeordnet bzw. ausgerichtet, der vorzugsweise der dritten Vorwärtsgangstufe zugeordnet ist.

Der zugehörige Radsatz beinhaltet dabei ein Festrad, das mit der einen Vorgelegewelle verbunden ist und in axialer Richtung in einem Raum zwischen dem der ersten Vorwärtsgangstufe zugeordneten Radsatz und der zugeordneten Schaltkupplung angeordnet ist.

Hierdurch kann es notwendig sein, das der ersten Vorwärtsgangstufe zugeordnete Losrad über einen Wellenstummel mit der Schaltkupplung zu verbinden, der in axialer Richtung den Radsatz der anderen Vorwärtsgangstufe (vorzugsweise der dritten) überbrückt.

In einer nicht beanspruchten Ausführungsform sind an der ersten Vorgelegewelle ein der zweiten Vorwärtsgangstufe zugeordnetes Losrad, ein der sechsten Vorwärtsgangstufe zugeordnetes Losrad, ein der siebten Vorwärtsgangstufe zugeordnetes Losrad und ein der ersten Vorwärtsgangstufe zugeordnetes Losrad angeordnet, und zwar in dieser Reihenfolge von einem Getriebeeingang aus gesehen.

Unter dem Getriebeeingang wird vorzugsweise jenes axiale Ende des Doppelkupplungsgetriebes verstanden, an dem die Eingangswellen mit einer Doppelkupplungsanordnung verbindbar sind.

Hierdurch kann eine axial kompakte Bauweise erzielt werden.

In einer weiteren nicht beanspruchten Ausführungsform sind an der zweiten Vorwärtsgangstufe ein der Rückwärtsgangstufe zugeordnetes Losrad, ein der vierten Vorwärtsgangstufe zugeordnetes Losrad, ein der fünften Vorwärtsgangstufe zugeordnetes Losrad und ein der dritten Vorwärtsgangstufe zugeordnetes Losrad angeordnet, und zwar in dieser Reihenfolge von einem Getriebeeingang aus gesehen.

Auch dies trägt zu einer axial kompakten Bauweise bei.

Erfindungsgemäß sind hingegen an der ersten Vorgelegewelle ein der zweiten Vorwärtsgangstufe zugeordnetes Losrad, ein der sechsten Vorwärtsgangstufe zugeordnetes Losrad, ein der ersten Vorwärtsgangstufe zugeordnetes Losrad und ein der siebten Vorwärtsgangstufe zugeordnetes Losrad angeordnet, und zwar in dieser Reihenfolge von einem Getriebeeingang aus gesehen.

Dabei kann der Radsatz für die Gangstufe sieben an einem axialen Ende des Doppelkupplungsgetriebes angeordnet werden, mit den oben beschriebenen Vorteilen.

Ferner ist erfindungsgemäß vorgesehen, dass an der zweiten Vorgelegewelle ein der Rückwärtsgangstufe zugeordnetes Losrad, ein der vierten Vorwärtsgangstufe zugeordnetes Losrad, ein der dritten Vorwärtsgangstufe zugeordnetes Losrad und ein der fünften Vorwärtsgangstufe zugeordnetes Losrad angeordnet sind, und zwar in dieser Reihenfolge von einem Getriebeeingang aus gesehen.

Auch dies trägt zu einer axial kompakten Bauweise bei.

In einer Variante ist es bevorzugt, wenn Losräder für die Gangstufen fünf und sieben sich ein Festrad teilen, und wenn Losräder für die Gangstufen vier und sechs sich ein Festrad teilen, so dass zwei Doppeinutzungen realisierbar sind.

Insgesamt ist es ferner vorteilhaft, wenn ein mit einer der Vorgelegewellen verbundenes Parksperrenrad in axialer Richtung mit einem an der anderen Vorgelegewelle gelagerten Losrad ausgerichtet ist, das einer Vorwärtsgangstufe, insbesondere der ersten Vorwärtsgangstufe oder der zweiten Vorwärtsgangstufe zugeordnet ist.

Hierdurch kann die Parksperrenanordnung axial optimiert in das Getriebe integriert werden, ohne zusätzlichen axialen Bauraumbedarf und ohne das Bereitstellen einer separaten Welle für das Parksperrenrad oder die Parksperrenanordnung.

Ferner ist es insgesamt vorteilhaft, wenn das der zweiten Vorwärtsgangstufe zugeordnete Losrad mit einem Nebenzahnrad fest verbunden ist, das mit einem der Rückwärtsgangstufe zugeordneten Losrad in Eingriff steht.

Hierdurch kann die Rückwärtsgangstufe als Windungsgangstufe realisiert werden. Dabei ist eine Drehrichtungsumkehr möglich, ohne dass für die Rückwärtsgangstufe eine separate Nebenwelle oder dergleichen vorgesehen werden muss.

Bei sämtlichen oben genannten Ausführungsformen lässt sich ein Doppelkupplungsgetriebe mit sieben Gangstufen realisieren, bei dem die Abstände zwischen der Eingangswellenanordnung und den Vorgelegewellen ähnlich ausgeführt sind, wie es in dem Dokument DE 10 2004 056 936 A1 beschrieben ist, auf das vorliegend zur ergänzenden Offenbarung Bezug genommen wird.

Ferner kann hierdurch die Spreizung maximiert werden, hier mit einem Wert größer als 8,5.

Ferner ist eine Hybridisierung des Doppelkupplungsgetriebes möglich.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine schematische Darstellung eines Antriebsstrangs eines Kraftfahrzeuges mit einer nicht erfindungsgemäßen Ausführungsform eines Doppelkupplungsgetriebes;
- Figur 2: eine Ausführungsform eines erfindungsgemäßen Doppelkupplungsgetriebes;
- Figur 3: eine weitere Ausführungsform eines erfindungsgemäßen Doppelkupplungsgetriebes;
- Figur 4: eine weitere Ausführungsform eines erfindungsgemäßen Doppelkupplungsgetriebes; und
- Figur 5: eine weitere Ausführungsform eines erfindungsgemäßen Doppelkupplungsgetriebes.

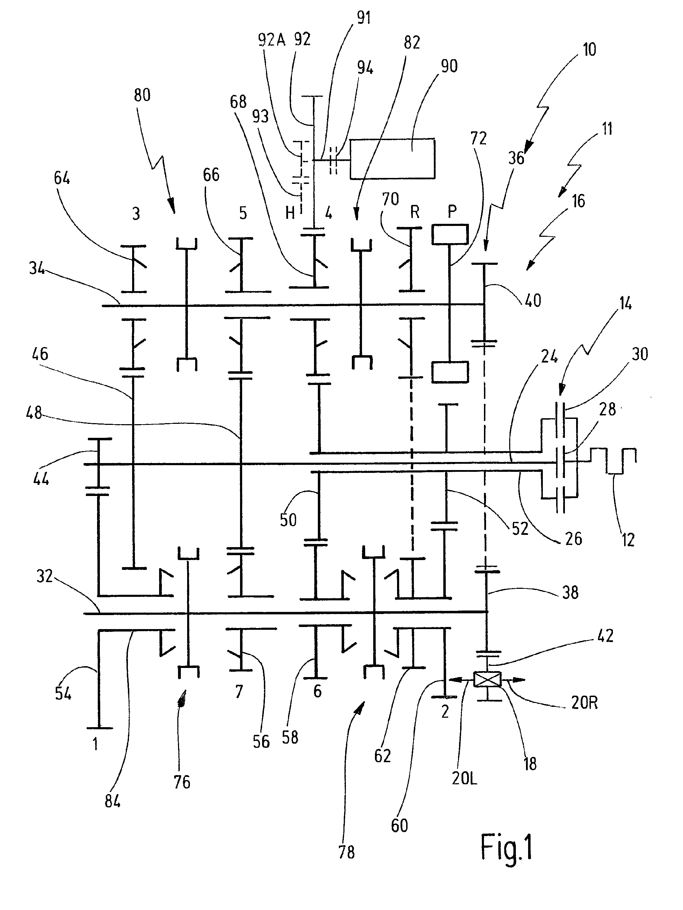

In Fig. 1 ist in schematischer Form ein Antriebsstrang 10 für ein Kraftfahrzeug 11 dargestellt.

Der Antriebsstrang 10 beinhaltet einen Antriebsmotor 12 wie einen Verbrennungsmotor, dessen Abtriebswelle mit dem Eingang einer Doppelkupplungsanordnung 14 verbunden ist. Die Ausgänge der Doppelkupplungsanordnung 14 sind mit der Eingangsanordnung eines Doppelkupplungsgetriebes 16 verbunden. Ein Ausgang des Doppelkupplungsgetriebes 16 ist mit einem Differenzial 18 verbunden, das Antriebsleistung auf zwei angetriebene Räder 20L, 20R verteilt.

Der Antriebsstrang ist für den Quereinbau, insbesondere für den Front-Quereinbau in dem Kraftfahrzeug 11 ausgelegt.

Das Doppelkupplungsgetriebe 16 beinhaltet eine erste Eingangswelle 24, die als Vollwelle ausgebildet ist, sowie eine zweite Eingangswelle 26, die als Hohlwelle konzentrisch zu der ersten Eingangswelle 24 ausgebildet ist. Die erste Eingangswelle 24 ist mit einem Ausgangsglied der ersten Kupplung 28 der Doppelkupplungsanordnung 14 verbunden. Die zweite Eingangswelle 26 ist mit einem Ausgangsglied einer zweiten Kupplung 30 der Doppelkupplungsanordnung 14 verbunden.

Das Doppelkupplungsgetriebe 16 weist ferner eine erste Vorgelegewelle 32 und eine zweite Vorgelegewelle 34 auf, die jeweils parallel versetzt zu den Eingangswellen 24, 26 angeordnet sind. Die Vorgelegewellen 32, 34 sind über einen Abtriebsradsatz 36 mit dem Differenzial 18 verbunden. Der Abtriebsradsatz 36 beinhaltet ein erstes Festrad 38, das mit der ersten Vorgelegewelle 32 verbunden ist, sowie ein weiteres Festrad 40, das mit der zweiten Vorgelegewelle 34 verbunden ist. Die beiden Festräder 38, 40 stehen in Eingriff mit dem Antriebsrad 42 des Differenzials 18.

An der ersten Getriebeeingangswelle 24 sind, von einem dem Getriebeeingang entgegengesetzten axialen Ende des Doppelkupplungsgetriebes 16 aus gesehen, ein erstes Festrad 44 für die Vorwärtsgangstufe 1, ein zweites Festrad 46 für die Vorwärtsgangstufe 3 sowie ein drittes Festrad 48 für die Vorwärtsgangstufen 5, 7 festgelegt. In entsprechender Weise ist von dem dem Getriebeeingang entgegengesetzten axialen Ende aus gesehen an der zweiten Eingangswelle 26 ein erstes Festrad 50 für die Vorwärtsgangstufen 4, 6 sowie ein zweites Festrad 52 für die Vorwärtsgangstufe 2 sowie für die Rückwärtsgangstufe R festgelegt.

An der ersten Vorgelegewelle 32 sind, wiederum von dem dem Getriebeeingang entgegengesetzten Ende aus gesehen, ein erstes Losrad 54 für die Vorwärtsgangstufe 1, ein weiteres Losrad 56 für die Vorwärtsgangstufe 7, ein weiteres Losrad 58 für die Vorwärtsgangstufe 6 sowie ein weiteres Losrad 60 für die Vorwärtsgangstufe 2 drehbar gelagert. Das Losrad 60 für die Vorwärtsgangstufe 2 ist mit einem Nebenzahnrad 62 fest verbunden, das zur Einrichtung der Rückwärtsgangstufe R dient, wie nachstehend erläutert wird.

An der zweiten Vorgelegewelle 34 sind, wiederum von dem dem Getriebeeingang entgegengesetzten axialen Ende aus gesehen, ein erstes Losrad 64 für die Vorwärtsgangstufe 3, ein weiteres Losrad 66 für die Vorwärtsgangstufe 5, ein weiteres Losrad 68 für die Vorwärtsgangstufe 4 sowie ein weiteres Losrad 70 für die Rückwärtsgangstufe R drehbar gelagert.

Die Festräder 38, 40 des Abtriebsradsatzes 36 sind benachbart zu dem Getriebeeingang angeordnet, wobei an der zweiten Vorgelegewelle 34 zwischen dem Festrad 40 und dem Losrad 70 für die Rückwärtsgangstufe R ein Parksperrenrad 72 festgelegt ist. Das Parksperrenrad 72 ist in axialer Richtung mit dem Losrad 60 für die Vorwärtsgangstufe 2 ausgerichtet.

Zwischen den Losrädern 54, 56 ist ein erstes Schaltkupplungspaket 76 mit zwei Schaltkupplungen zum Ein- und Auslegen der Vorwärtsgangstufen 1, 7 angeordnet. Zwischen den Losrädern 58, 60 für die Vorwärtsgangstufen 6, 2 ist ein zweites Schaltkupplungspaket 78 zum Ein- und Auslegen dieser Vorwärtsgangstufen angeordnet.

An der zweiten Vorgelegewelle 34 ist zwischen dem Losrad 64 für die Vorwärtsgangstufe 3 und dem Losrad 66 für die Vorwärtsgangstufe 5 ein drittes Schaltkupplungspaket 80 zum Ein- und Auslegen dieser Vorwärtsgangstufen angeordnet. Schließlich ist an der zweiten Vorgelegewelle 34 zwischen dem Losrad 68 für die Vorwärtsgangstufe 4 und dem Losrad 70 für die Rückwärtsgangstufe R ein viertes Schaltkupplungspaket 82 zum Ein- und Auslegen dieser Gangstufen angeordnet.

Das Festrad 44 steht in Eingriff mit dem Losrad 54. Das Festrad 46 steht in Eingriff mit dem Losrad 64. Das Festrad 48 steht in Eingriff mit den Losrädern 56, 66. Das Festrad 50 steht in Eingriff mit den Losrädern 58, 68. Das Festrad 52 steht in Eingriff mit dem Losrad 60.

Das Nebenzahnrad 62 steht in Eingriff mit dem Losrad 70 für die Rückwärtsgangstufe R, um auf diese Weise eine Drehrichtungsumkehr zu erzielen, ohne eine separate Nebenwelle vorsehen zu müssen.

Der Radsatz 46, 64 für die Vorwärtsgangstufe 3 ist in axialer Richtung zwischen dem Radsatz 54, 44 für die Vorwärtsgangstufe 1 und dem Schaltkupplungspaket 76 angeordnet. Zu diesem Zweck ist das Losrad 54 über einen Wellenstummel 84 mit dem ersten Schaltkupplungspaket 76 verbunden.

Das Parksperrenrad 72 dient zum Einrichten einer Parksperrenanordnung P, die beispielsweise eine nicht näher gezeigte Parksperrenklinke aufweist.

Bei dem Doppelkupplungsgetriebe 16 werden zwei Doppelnutzungen für die Gangstufen 5, 7 bzw. 4, 6 realisiert. Ferner ist das Parksperrenrad 72 mit dem Losrad 60 für die Vorwärtsgangstufe 2 axial ausgerichtet. Insgesamt kann auf diese Weise eine axial kompakte Bauweise erzielt werden. Über das Nebenzahnrad 62 kann eine geeignete Übersetzung für die Rückwärtsgangstufe R eingestellt werden.

An das Losrad 68 für die Vorwärtsgangstufe 4 ist eine elektrische Maschine 90 angebunden. Dieses Losrad 68 dient daher zur Hybridisierung H des Doppelkupplungsgetriebes 16. Die elektrische Maschine 90 weist eine Ausgangswelle 91 auf, die parallel zu den Wellen 24, 26, 32, 34 ausgerichtet und mit einem Zahnrad 92 verbunden ist. Das Zahnrad 92 steht in Eingriff mit dem Losrad 68 für die Vorwärtsgangstufe 4.

Alternativ hierzu ist es möglich, die Maschinenwelle 91 mit einem Zahnrad 92A zu verbinden, das über ein weiteres Zwischenzahnrad 93 mit dem Losrad 68 in Verbindung steht.

Die elektrische Maschine 90 kann auf diese Weise mit dem Losrad 68 fest gekoppelt sein. Alternativ ist es möglich, die elektrische Maschine 90 über eine Zuschaltkupplung 94 an das Losrad 68 anzubinden oder hiervon abzukoppeln.

Das Doppelkupplungsgetriebe 16 kann mit oder ohne diese Hybridisierung H ausgebildet werden. Gleiches gilt für die im Folgenden erläuterten Doppelkupplungsgetriebe, die hinsichtlich Aufbau und Funktionsweise generell dem Doppelkupplungsgetriebe 16 der Fig. 1 entsprechen. Gleiche Elemente sind daher durch gleiche Bezugszeichen gekennzeichnet. Im Folgenden werden im Wesentlichen die Unterschiede erläutert.

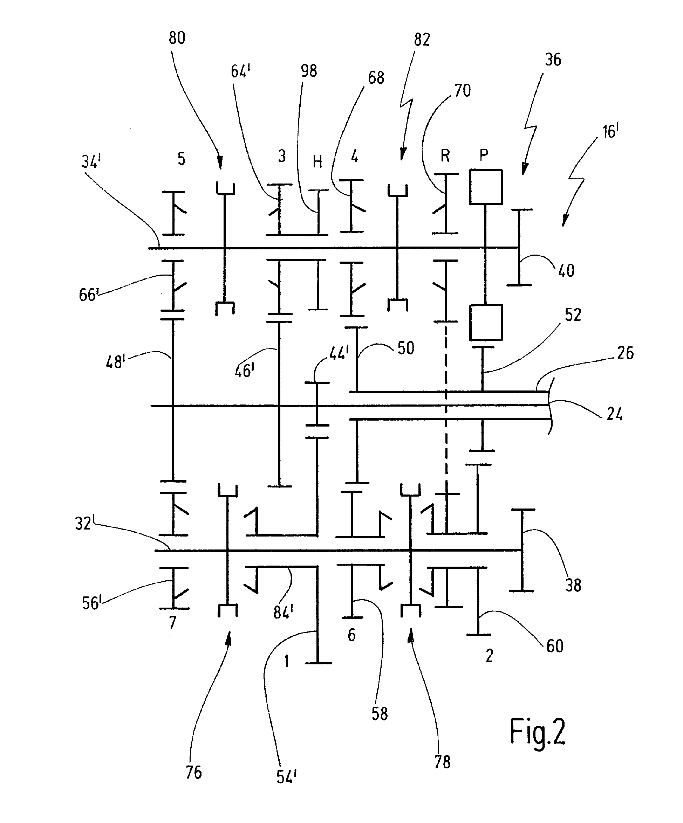

In Fig. 2 ist ein Doppelkupplungsgetriebe 16' gezeigt, bei dem die der ersten Eingangswelle 24 zugeordneten Radsätze axial vertauscht sind. An dem dem Getriebeeingang gegenüberliegenden Ende ist folglich ein Festrad 48' mit der ersten Eingangswelle 24 verbunden, das mit einem Losrad 66' für die Vorwärtsgangstufe 5 an der zweiten Vorgelegewelle 34' sowie mit einem Losrad 56' für die Vorwärtsgangstufe 7 an der ersten Vorgelegewelle 32' in Eingriff steht. Durch die Anordnung des Losrades 56' für die höchste Gangstufe an dem axialen Ende kann das Losrad 56' mit einem kleineren Fußdurchmesser ausgeführt werden, so dass eine größere Spreizung des Getriebes realisierbar ist.

Bei dieser Ausführungsform ist zwischen dem Losrad 56' für die Vorwärtsgangstufe 7 und dem Losrad 58 für die Vorwärtsgangstufe 6 das Losrad 54' für die Vorwärtsgangstufe 1 angeordnet, das mit einem Festrad 44' der ersten Eingangswelle 24 in Eingriff steht. Der Radsatz 46', 64' für die Vorwärtsgangstufe 3 ist in axialer Richtung zwischen dem Radsatz 44', 54' und dem ersten Schaltkupplungspaket 76 angeordnet. Hierbei ist das Losrad 54' wiederum über einen Wellenstummel 84' mit dem ersten Schaltkupplungspaket 76 verbunden.

In axialer Ausrichtung mit dem Radsatz 44', 54' für die erste Vorwärtsgangstufe ist ein Nebenzahnrad 98 angeordnet, das starr mit dem Losrad 64' für die Vorwärtsgangstufe 3 verbunden ist. Das Nebenzahnrad 98 dient in diesem Fall zur Hybridisierung H, wobei eine elektrische Maschine 90 auf die gleiche Weise hieran angebunden werden kann, wie es in Bezug auf Fig. 1 beschrieben worden ist.

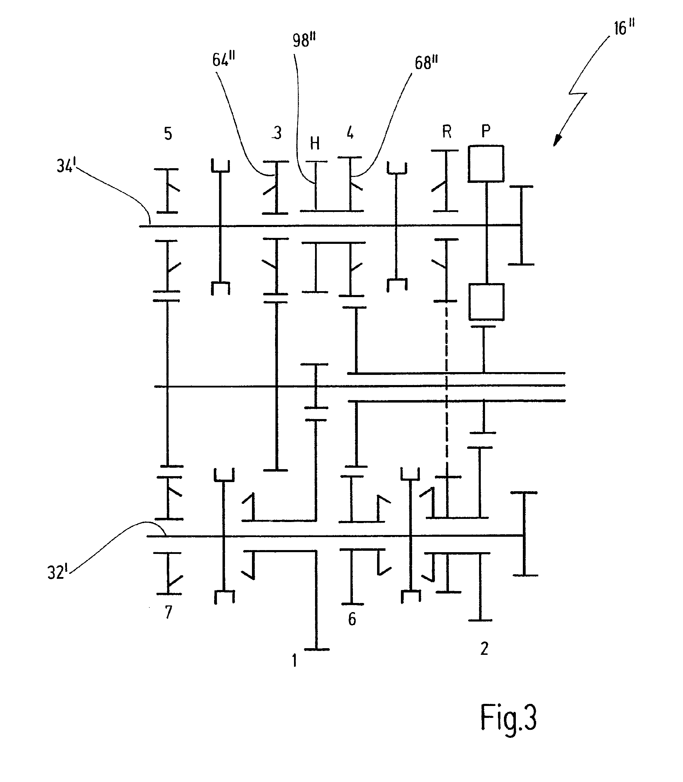

In Fig. 3 ist ein weiteres Doppelkupplungsgetriebe 16" gezeigt, das hinsichtlich Aufbau und Funktionsweise generell dem Doppelkupplungsgetriebe 16' der Fig. 2 entspricht. Gleiche Elemente sind daher durch gleiche Bezugszeichen gekennzeichnet. Im Folgenden werden im Wesentlichen die Unterschiede erläutert.

Bei dem Doppelkupplungsgetriebe 16" ist nicht das Losrad 64" für die Vorwärtsgangstufe 3 sondern das Losrad 68" für die Vorwärtsgangstufe 4 mit einem Nebenzahnrad 98" starr verbunden, das zur Hybridisierung H verwendet werden kann und das mit dem Radsatz für die Vorwärtsgangstufe 1 axial ausgerichtet ist.

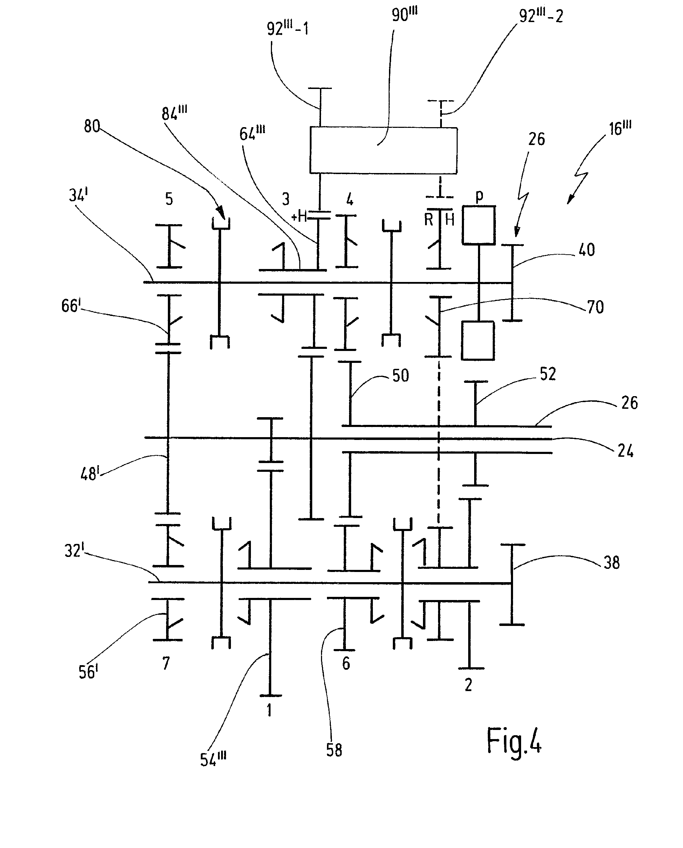

In Fig. 4 ist eine weitere Ausführungsform eines Doppelkupplungsgetriebes 16"' gezeigt, das hinsichtlich Aufbau und Funktionsweise generell dem Doppelkupplungsgetriebe 16" der Fig. 3 entspricht. Gleiche Elemente sind daher durch gleiche Bezugszeichen gekennzeichnet. Im Folgenden werden im Wesentlichen die Unterschiede erläutert.

Bei dem Doppelkupplungsgetriebe 16"' ist, ähnlich wie bei dem Doppelkupplungsgetriebe 16 der Fig. 1, ein Losrad für eine Vorwärtsgangstufe direkt mit einer elektrischen Maschine verbunden, also nicht über ein Nebenzahnrad wie bei den Fig. 2 und 3.

In diesem Fall ist das Losrad 64"' zur Einrichtung der Vorwärtsgangstufe 3 und zur Hybridisierung ausgelegt. Dabei sind die axialen Positionen des Radsatzes für die Vorwärtsgangstufe 1 und des Radsatzes für die Vorwärtsgangstufe 3 gegenüber den Ausführungsformen der Fig. 2 und 3 vertauscht. Mit anderen Worten ist der Radsatz für die Vorwärtsgangstufe 3 einschließlich des Losrades 64'" in axialer Richtung zwischen dem Losrad 54"' für die Vorwärtsgangstufe 1 und dem Losrad 58 für die Vorwärtsgangstufe 6 angeordnet. Hierdurch ist es möglich, das Losrad 64'" in axiale Richtung näher zum Getriebeeingang zu rücken. Hierbei kann es bevorzugt sein, das Losrad 64'" über einen Wellenstummel 84"' mit dem dritten Schaltkupplungspaket 80 zu verbinden.

Ferner ist zur Hybridisierung vorliegend eine elektrische Maschine 90'" vorgesehen, die als Außenläufermaschine ausgebildet ist. An dem Außenläufer der elektrischen Maschine 90'" sind ein erstes Zahnrad 92"'-1 oder ein zweites Zahnrad 92"'-2 in Form von Zahnkränzen festgelegt. Das erste Zahnrad 92"'-1 steht in direktem Eingriff mit dem Losrad 64'" für die Vorwärtsgangstufe 3. Im anderen Fall steht das zweite Zahnrad 92"'-2 in direktem Eingriff mit dem Losrad 70 für die Rückwärtsgangstufe R. Bei dieser Variante kann eine Hybridisierung durch eine Außenläufermaschine genutzt werden, die in unmittelbarer Nähe zu den Zahnrädern der Welle 34' montiert ist. Damit ergibt sich eine sehr kompakte Anordnung des Hybridantriebs.

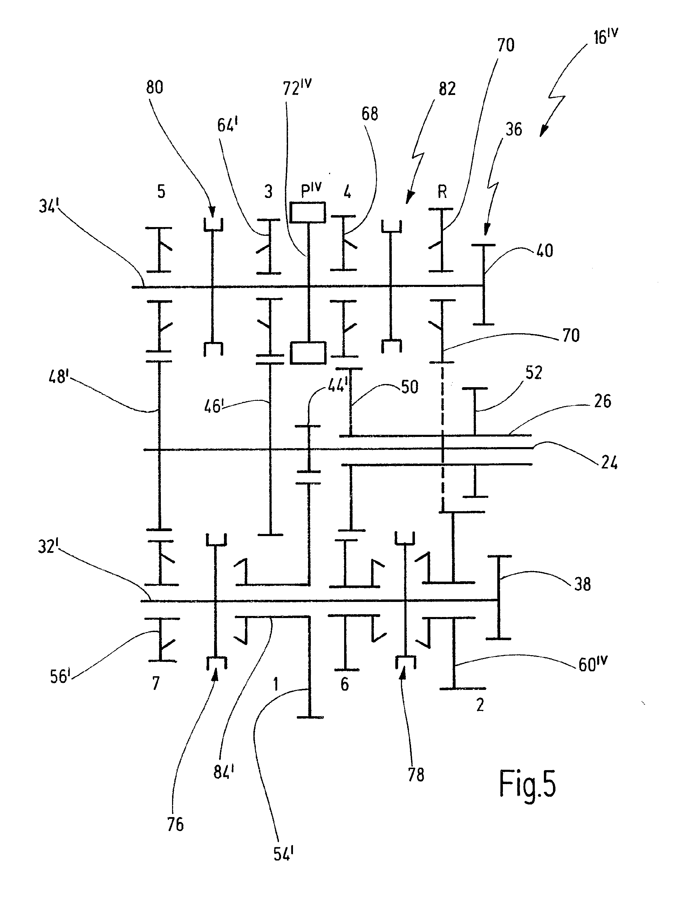

In Fig. 5 ist eine weitere Ausführungsform eines Stufenwechselgetriebes 16^{IV} dargestellt, das hinsichtlich Aufbau und Funktionsweise generell dem Stufenwechselgetriebe 16' der Fig. 2 entspricht. Gleiche Elemente sind daher durch gleiche Bezugszeichen gekennzeichnet. Im Folgenden werden im Wesentlichen die Unterschiede erläutert.

Bei dem Doppelkupplungsgetriebe 16^{IV} ist ein Parksperrenrad 72^{IV} einer Parksperrenanordnung P^{IV} mit der zweiten Vorgelegewelle 34' fest verbunden und in axialer Richtung zwischen dem Losrad 64' für die Vorwärtsgangstufe 3 und dem Losrad 68 für die Vorwärtsgangstufe 4 angeordnet. Das Parksperrenrad 72^{IV} ist bei dieser Variante axial mit dem Radsatz 44', 54' für die Vorwärtsgangstufe 1 ausgerichtet. Bei dieser Variante kann die Parksperrenanordnung auf einfache Weise mittels einer Schaltwalze oder dergleichen betätigt werden, da das Parksperrenrad 72^{IV} in axialer Richtung zwischen den Schaltkupplungspaketen 80, 82 angeordnet ist.

Bei dieser Variante steht das Losrad 60^{IV} der Vorwärtsgangstufe 2 direkt in Eingriff mit dem Losrad 70 für die Rückwärtsgangstufe R sowie dem Festrad 52 auf der Welle 26. Damit kann das Losrad 60^{IV} axial kürzer bauen als z.B. das weiter oben erwähnte Losrad 60 zusammen mit seinem Nebenzahnrad 62. Hierdurch kann die Schaltkupplung 78 näher zur Getriebeeingangsseite rücken und kann in etwa ausgerichtet mit dem Schaltkupplungspaket 82 angeordnet werden. Hierdurch kann eine relativ einfache Anordnung der Schaltbetätigung mittels einer Schaltwalze ermöglicht werden.

## Patentansprüche

1. Doppelkupplungsgetriebe (16) für ein Kraftfahrzeug (11), mit einer ersten Eingangswelle (24) und einer zweiten Eingangswelle (26) sowie mit einer ersten und einer zweiten Vorgelegewelle (32, 34), wobei die Eingangswellen (24, 26) und die Vorgelegewellen (32, 34) über eine Mehrzahl von schaltbaren Radsätzen miteinander verbunden sind, um wenigstens sieben Vorwärtsgangstufen (1-7) und wenigstens eine Rückwärtsgangstufe (R) einzurichten, wobei wenigstens ein Radsatz (50, 58, 68; 48, 56, 66) ein mit einer der Eingangswellen (24, 26) verbundenes Festrad (48; 50) sowie zwei Losräder (56, 66; 58, 68) aufweist, die an der ersten bzw. an der zweiten Vorgelegewelle (32, 34) drehbar gelagert sind und mit dem Festrad (48; 50) in Eingriff stehen, wobei an der ersten Vorgelegewelle (32') ein der zweiten Vorwärtsgangstufe (2) zugeordnetes Losrad (60), ein der sechsten Vorwärtsgangstufe (6) zugeordnetes Losrad (58), ein der ersten Vorwärtsgangstufe (1) zugeordnetes Losrad (54'; 54"'; 54^{IV}) und ein der siebten Vorwärtsgangstufe (7) zugeordnetes Losrad (56') angeordnet sind, und zwar in dieser Reihenfolge von einem Getriebeeingang aus gesehen,
**dadurch gekennzeichnet, dass**
an der zweiten Vorgelegewelle (34') ein der Rückwärtsgangstufe (R) zugeordnetes Losrad (70), ein der vierten Vorwärtsgangstufe (4) zugeordnetes Losrad (68), ein der dritten Vorwärtsgangstufe (3) zugeordnetes Losrad (64'; 64") und ein der fünften Vorwärtsgangstufe (5) zugeordnetes Losrad (66') angeordnet sind, und zwar in dieser Reihenfolge von einem Getriebeeingang aus gesehen, wobei eine elektrische Maschine (90) an ein Losrad (68; 64'; 68"; 64") von einem der Radsätze angebunden oder mittels einer Zuschaltkupplung (94) anbindbar ist.

2. Doppelkupplungsgetriebe nach Anspruch 1, **dadurch gekennzeichnet, dass** das Losrad (68; 64'; 68"; 64") der dritten Gangstufe (3) oder der vierten Gangstufe (4) zugeordnet ist.

3. Doppelkupplungsgetriebe nach Anspruch 1 oder 2, **dadurch gekennzeichnet, dass** die elektrische Maschine (90) über ein Zahnrad (92) an das Losrad (68; 64"') angebunden ist, wobei das Zahnrad (92) mit dem Losrad (68; 64"') in direktem Eingriff steht.

4. Doppelkupplungsgetriebe nach Anspruch 1 oder 2, **dadurch gekennzeichnet, dass** die elektrische Maschine (90) über ein Zahnrad (92) an das Losrad (64'; 68") angebunden ist, wobei das Zahnrad (92) mit einem Zahnrad (98; 98") in direktem Eingriff steht, das fest mit dem Losrad (64'; 68") verbunden ist.

5. Doppelkupplungsgetriebe nach einem der Ansprüche 1, 3 oder 4, wenn nicht abhängig von Anspruch 2, **dadurch gekennzeichnet, dass** die elektrische Maschine (90) an ein Losrad (68; 64'; 68"; 64"'), das einer Vorwärtsgangstufe (3, 4) zugeordnet ist, oder an ein Losrad anbindbar ist, das einer Rückwärtsgangstufe (R) zugeordnet ist.

6. Doppelkupplungsgetriebe nach einem der Ansprüche 1 bis 5, **dadurch gekennzeichnet, dass** die elektrische Maschine (90) als Außenläufermaschine ausgebildet ist.

7. Doppelkupplungsgetriebe nach einem der Ansprüche 1 bis 6 oder nach dem Oberbegriff des Anspruchs 1, **dadurch gekennzeichnet, dass** ein der siebten Vorwärtsgangstufe (7) zugeordnetes Losrad (56') an einem dem Getriebeeingang entgegengesetzten Ende von einer (32') der Vorgelegewellen (32', 34') angeordnet ist.

8. Doppelkupplungsgetriebe nach Anspruch 7, **dadurch gekennzeichnet, dass** das der siebten Vorwärtsgangstufe (7) zugeordnete Losrad (56') mit einem Festrad (48') in Eingriff steht, das ferner mit einem einer weiteren, vorzugsweise der fünften Vorwärtsgangsstufe (5) zugeordneten Losrad (66') in Eingriff steht.

9. Doppelkupplungsgetriebe nach Anspruch 7 oder 8, **dadurch gekennzeichnet, dass** in axialer Richtung zwischen einem der ersten Vorwärtsgangstufe (1) zugeordneten Radsatz und einer diesen Radsatz schaltenden Schaltkupplung (76) ein Radsatz angeordnet ist, der vorzugsweise der dritten Vorwärtsgangstufe (3) zugeordnet ist.

10. Doppelkupplungsgetriebe nach einem der Ansprüche 1 bis 9, **dadurch gekennzeichnet, dass** ein mit einer (34) der Vorgelegewellen (32, 34) verbundenes Parksperrenrad (72; 72^{IV}) in axialer Richtung mit einem an der anderen Vorgelegewelle (32) gelagerten Losrad (60; 54^{IV}) ausgerichtet ist, das einer Vorwärtsgangsstufe, insbesondere der zweiten Vorwärtsgangstufe (2) oder der ersten Vorwärtsgangstufe (1), zugeordnet ist.

11. Doppelkupplungsgetriebe nach einem der Ansprüche 1 bis 10, **dadurch gekennzeichnet, dass** das der zweiten Vorwärtsgangstufe (2) zugeordnete Losrad (60) mit einem Nebenzahnrad (62) fest verbunden ist, das mit einem der Rückwärtsgangstufe (R) zugeordneten Losrad (70) in Eingriff steht.

## Claims

1. Dual coupling gear mechanism (16) for a motor vehicle (11), having a first input shaft (24) and a second input shaft (26) and having a first and a second countershaft (32, 34), the input shafts (24, 26) and the countershafts (32, 34) being connected to each other by means of a plurality of shiftable wheel sets in order to establish at least seven forward gear stages (1-7) and at least one reverse gear stage (R), wherein at least one wheel set (50, 58, 68; 48, 56, 66) has a fixed wheel (48; 50) which is connected to one of the input shafts (24, 26) and has two loose wheels (56, 66; 58, 68) which are rotatably supported on the first and on the second countershaft (32, 34), respectively and which are in engagement with the fixed wheel (48; 50), wherein there are arranged on the first countershaft (32') a loose wheel (60) which is associated with the second forward gear stage (2), a loose wheel (58) which is associated with the sixth forward gear stage (6), a loose wheel (54'; 54"'; 54^{IV}) which is associated with the first forward gear stage (1) and a loose wheel (56') which is associated with the seventh forward gear stage (7), that is, in this sequence when viewed from a gear input,
**characterized in that**
there are arranged on the second countershaft (34') a loose wheel (70) which is associated with the reverse gear stage (R), a loose wheel (68) which is associated with the fourth forward gear stage (4), a loose wheel (64'; 64") which is associated with the third forward gear stage (3) and a loose wheel (66') which is associated with the fifth forward gear stage (5), that is, in this sequence when viewed from a gear input, wherein an electric engine (90) is connected to a loose wheel (68; 64'; 68"; 64") of one of the wheel sets or can be connected thereto by means of a shift clutch (94).

2. Dual coupling gear mechanism according to Claim 1, **characterized in that** the loose wheel (68; 64'; 68"; 64") is associated with the third gear stage (3) or the fourth gear stage (4).

3. Dual coupling gear mechanism according to Claim 1 or Claim 2, **characterized in that** the electric engine (90) is connected to the loose wheel (68; 64"') by means of a toothed wheel (92), the toothed wheel (92) being in direct engagement with the loose wheel (68; 64"').

4. Dual coupling gear mechanism according to Claim 1 or Claim 2, **characterized in that** the electric engine (90) is connected to the loose wheel (64'; 68") by means of a toothed wheel (92), the toothed wheel (92) being in direct engagement with a toothed wheel (98; 98") which is securely connected to the loose wheel (64'; 68").

5. Dual coupling gear mechanism according to any one of Claims 1, 3 or 4, if not dependent on claim 2, **characterized in that** the electric engine (90) can be connected to a loose wheel (68; 64'; 68"; 64"') which is associated with a forward gear stage (3, 4), or to a loose wheel which is associated with a reverse gear stage (R).

6. Dual coupling gear mechanism according to any one of Claims 1 to 5, **characterized in that** the electric engine (90) is constructed as an exterior rotor engine.

7. Dual coupling gear mechanism according to any one of Claims 1 to 6 or according to the preamble of Claim 1, **characterized in that** a loose wheel (56') which is associated with the seventh forward gear stage (7) is arranged at an end of one (32') of the countershafts (32', 34') opposite the gear input.

8. Dual coupling gear mechanism according to Claim 7, **characterized in that** the loose wheel (56') associated with the seventh forward gear stage (7) is in engagement with a fixed wheel (48') which is further in engagement with a loose wheel (66') which is associated with another forward gear stage, preferably the fifth forward gear stage (5).

9. Dual coupling gear mechanism according to Claim 7 or Claim 8, **characterized in that**, in an axial direction between a wheel set associated with the first forward gear stage (1) and a shift clutch (76) which shifts this wheel set, there is arranged a wheel set which is preferably associated with the third forward gear stage (3).

10. Dual coupling gear mechanism according to any one of Claims 1 to 9, **characterized in that** a park locking wheel (72; 72^{IV}) which is connected to one (34) of the countershafts (32, 34) is orientated in an axial direction with a loose wheel (60; 54^{IV}) which is supported on the other countershaft (32) and which is associated with a forward gear stage, in particular the second forward gear stage (2) or the first forward gear stage (1).

11. Dual coupling gear mechanism according to any one of Claims 1 to 10, **characterized in that** the loose wheel (60) which is associated with the second forward gear stage (2) is securely connected to an auxiliary toothed wheel (62) which is in engagement with a loose wheel (70) which is associated with the reverse gear stage (R).

## Revendications

1. Transmission à double embrayage (16) pour un véhicule automobile (11), comprenant un premier arbre d'entrée (24) et un deuxième arbre d'entrée (26) ainsi qu'un premier et un deuxième arbre intermédiaire (32, 34), les arbres d'entrée (24, 26) et les arbres intermédiaires (32, 34) étant connectés les uns aux autres par le biais d'une pluralité de jeux de pignons commutables, afin de produire au moins sept rapports de vitesse de marche avant (1-7) et au moins un rapport de vitesse de marche arrière (R), au moins un jeu de pignons (50, 58, 68 ; 48, 56, 66) présentant un pignon fixe (48 ; 50) connecté à l'un des arbres d'entrée (24, 26) ainsi que deux pignons fous (56, 66 ; 58, 68) qui sont montés à rotation sur le premier respectivement sur le deuxième arbre intermédiaire (32, 34) et qui sont en prise avec le pignon fixe (48 ; 50), un pignon fou (60) associé au deuxième rapport de vitesse de marche avant (2), un pignon fou (58) associé au sixième rapport de vitesse de marche avant (6), un pignon fou (54' ; 54"'; 54^{IV}) associé au premier rapport de vitesse de marche avant (1) et un pignon fou (56') associé au septième rapport de vitesse de marche avant (7) étant disposés sur le premier arbre intermédiaire (32'), et ce dans cette succession vu depuis une entrée de la transmission,
**caractérisée en ce**
**qu'**un pignon fou (70) associé au rapport de vitesse de marche arrière (R), un pignon fou (68) associé au quatrième rapport de vitesse de marche avant (4), un pignon fou (64' ; 64") associé au troisième rapport de vitesse de marche avant (3) et un pignon fou (66') associé au cinquième rapport de vitesse de marche avant (5) sont disposés sur le deuxième arbre intermédiaire (34'), et ce dans cette succession vu depuis une entrée de la transmission, une machine électrique (90) étant reliée à un pignon fou (68 ; 64' ; 68" ; 64") de l'un des jeux de pignons ou pouvant être reliée à celui-ci par le biais d'un embrayage de commutation (94).

2. Transmission à double embrayage selon la revendication 1, **caractérisée en ce que** le pignon fou (68 ; 64' ; 68" ; 64") est associé au troisième rapport de vitesse (3) ou au quatrième rapport de vitesse (4).

3. Transmission à double embrayage selon la revendication 1 ou 2, **caractérisée en ce que** la machine électrique (90) est reliée par le biais d'une roue dentée (92) au pignon fou (68 ; 64"'), la roue dentée (92) étant en prise directe avec le pignon fou (68 ; 64"').

4. Transmission à double embrayage selon la revendication 1 ou 2, **caractérisée en ce que** la machine électrique (90) est reliée par le biais d'une roue dentée (92) au pignon fou (64' ; 68"), la roue dentée (92) étant en prise directe avec une roue dentée (98 ; 98") qui est connectée fixement au pignon fou (64' ; 68").

5. Transmission à double embrayage selon l'une quelconque des revendications 1, 3 ou 4, lorsqu'elles ne dépendent pas de la revendication 2, **caractérisée en ce que** la machine électrique (90) peut être reliée à un pignon fou (68 ; 64' ; 68" ; 64"') qui est associé à un rapport de vitesse de marche avant (3, 4) ou peut être reliée à un pignon fou qui est associé à un rapport de vitesse de marche arrière (R).

6. Transmission à double embrayage selon l'une quelconque des revendications 1 à 5, **caractérisée en ce que** la machine électrique (90) est réalisée sous forme de machine à rotor extérieur.

7. Transmission à double embrayage selon l'une quelconque des revendications 1 à 6, ou selon le préambule de la revendication 1, **caractérisée en ce qu'**un pignon fou (56') associé au septième rapport de vitesse de marche avant (7) est disposé au niveau d'une extrémité opposée à l'entrée de la transmission de l'un (32') des arbres intermédiaires (32', 34').

8. Transmission à double embrayage selon la revendication 7, **caractérisée en ce que** le pignon fou (56') associé au septième rapport de vitesse de marche avant (7) est en prise avec un pignon fixe (48') qui est en outre en prise avec un pignon fou supplémentaire (66') associé de préférence au cinquième rapport de vitesse de marche avant (5).

9. Transmission à double embrayage selon la revendication 7 ou 8, **caractérisée en ce que** dans la direction axiale entre un jeu de pignons associé au premier rapport de vitesse de marche avant (1) et un embrayage de changement de vitesses (76) commutant ce jeu de pignons, est disposé un jeu de pignons qui est de préférence associé au troisième rapport de vitesse de marche avant (3).

10. Transmission à double embrayage selon l'une quelconque des revendications 1 à 9, **caractérisée en ce qu'**un pignon de verrouillage de stationnement (72 ; 72^{IV}) connecté à l'un (34) des arbres intermédiaires (32, 34) est orienté dans la direction axiale avec un pignon fou (60 ; 54^{IV}) monté sur l'autre arbre intermédiaire (32), lequel est associé à un rapport de vitesse de marche avant, en particulier le deuxième rapport de vitesse de marche avant (2) ou le premier rapport de vitesse de marche avant (1).

11. Transmission à double embrayage selon l'une quelconque des revendications 1 à 10, **caractérisée en ce que** le pignon fou (60) associé au deuxième rapport de vitesse de marche avant (2) est connecté fixement à une roue dentée auxiliaire (62) qui est en prise avec un pignon fou (70) associé au rapport de vitesse de marche arrière (R).
